# FASCICULE DE BREVET EUROPEEN

(11) **EP 4 237 666 B1**
(45) Date de publication et mention de la délivrance du brevet: **27.11.2024**
(21) Numéro de dépôt: 21807195.9
(22) Date de dépôt: 21.10.2021
(51) Int. Cl.: F01D 15/10, F02C 3/10, F02C 3/107, F02C 7/26, F02C 7/275, F02C 7/32

(54) **TURBOMACHINE À TURBINE LIBRE COMPRENANT DES EQUIPEMENTS ENTRAINÉS PAR LA TURBINE LIBRE**
TURBOMASCHINE MIT FREIER TURBINE UND MIT EINER DURCH DIE FREIE TURBINE ANGETRIEBENEN VORRICHTUNG
FREE TURBINE TURBOMACHINE COMPRISING EQUIPMENT DRIVEN BY THE FREE TURBINE

(30) Priorité: 29.10.2020 FR 2011081
(43) Date de publication de la demande: 06.09.2023
(73) Titulaire: Safran Helicopter Engines, 64510 Bordes (FR)
(72) Inventeur: VIVE, Loïs, Pierre, Denis, 77550 MOISSY-CRAMAYEL (FR); DROUIN, Thomas, 77550 MOISSY-CRAMAYEL (FR); BEDRINE, Olivier, 77550 MOISSY-CRAMAYEL (FR)
(74) Mandataire: Cabinet Beau de Loménie
(86) Numéro de dépôt international: PCT/FR2021/051849
(87) Numéro de publication internationale: WO 2022/090650

(56) Documents cités:
- FR-A1- 3 019 220
- FR-A1- 3 081 150
- US-A1- 2016 097 328
- US-A1- 2017 241 347

## Description

### Domaine Technique

La présente invention se rapporte au domaine général des turbomachines aéronautiques à turbine libre, notamment pour turbogénérateurs, et plus particulièrement à une architecture d'une telle turbomachine permettant l'entrainement d'équipements via la turbine libre sans compromettre le fonctionnement des équipements lors du démarrage de la turbomachine.

### Technique antérieure

Un turbomoteur à turbine libre pour hélicoptère comporte généralement un générateur de gaz et une turbine libre entraînée en rotation par le flux de gaz généré par le générateur de gaz, ainsi qu'une machine électrique réversible qui peut être couplée au générateur de gaz notamment pour mettre en rotation le générateur de gaz lors d'une phase de démarrage du turbomoteur.

Traditionnellement, le générateur de gaz comporte au moins un compresseur et une turbine couplés en rotation. Le principe de fonctionnement est le suivant : l'air frais entrant dans le turbomoteur est comprimé du fait de la rotation du compresseur avant d'être envoyé vers une chambre de combustion où il est mélangé à un carburant. Les gaz brûlés lors de la combustion sont ensuite évacués à grande vitesse.

Il se produit alors une première détente dans la turbine du générateur de gaz, durant laquelle cette dernière extrait l'énergie nécessaire à l'entraînement du compresseur et des équipements. La turbine du générateur de gaz n'absorbe pas toute l'énergie cinétique des gaz brûlés et l'excédent d'énergie cinétique correspond au flux de gaz généré par le générateur de gaz. Ce dernier fournit donc de l'énergie cinétique à la turbine libre de sorte qu'il se produit une seconde détente dans la turbine libre qui transforme cette énergie cinétique en énergie mécanique afin d'entraîner un organe récepteur, telle rotor de l'hélicoptère.

Lors de la phase de démarrage du turbomoteur, il est nécessaire d'entraîner en rotation le générateur de gaz, c'est-à-dire entraîner en rotation le compresseur couplé à la turbine ainsi que les différents équipements qui sont connectés. Comme mentionné en préambule, c'est précisément l'un des rôles de la machine électrique réversible qui est le plus souvent un moteur électrique apte à fonctionner de manière réversible en génératrice électrique.

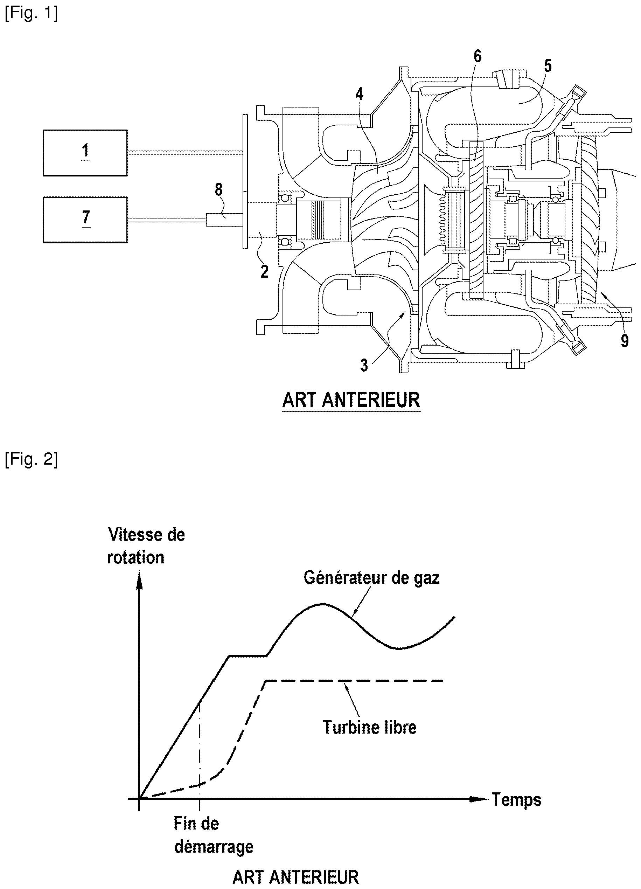

Comme cela est illustré sur la figure 1 qui présente schématiquement une turbomachine à turbine libre selon l'état de la technique, pour le démarrage, une machine électrique 1 dans un fonctionnement moteur entraîne l'arbre mécanique 2 du générateur de gaz 3, jusqu'à ce que la rotation de celui-ci soit entretenue par la combustion de carburant. L'entraînement en rotation de l'arbre du générateur de gaz par la machine électrique réversible fonctionnant en mode moteur pendant la phase de démarrage permet en outre d'entrainer des équipements, non représentés sur cette figure et qui peuvent être entraînés par l'arbre 2 via une boite d'accessoires. Ceci permet d'alimenter la turbomachine en carburant et en huile et de faire circuler de l'air dans le compresseur 4 et donc d'amener de l'air comprimé dans la chambre de combustion 5 afin d'initier la combustion. Cette combustion produit alors le flux gazeux permettant d'entraîner la turbine 6 de la turbine à gaz 3 en rotation, à la suite de quoi le compresseur 4 et les équipements sont entraînés en rotation par la turbine 6 sans l'aide de la machine électrique, ce qui signifie que le générateur de gaz 3 fonctionne de manière autonome, traduisant la fin de la phase de démarrage du turbomoteur.

En outre, pour un turbogénérateur comme celui illustré sur la figure 1, une seconde machine électrique 7 en prise sur l'arbre 8 de la turbine libre 9 permet de répondre au besoin de génération forte puissance.

Il est connu que les aéronefs, dans lesquels de tels turbomoteurs sont notamment destinés à être intégrés, comportent de nombreux composants électriques qu'il est nécessaire d'alimenter par de l'énergie électrique. Par exemple, pour un aéronef à décollage et atterrissage vertical ayant une propulsion électrique, il est nécessaire d'alimenter en énergie électrique l'ensemble des rotors électriques qui l'équipent.

Sur une turbomachine comme illustré sur la figure 1, les équipements tels que la pompe à carburant, et la pompe à huile sont mécaniquement reliés à l'arbre 2 du générateur de gaz 3 via la boite d'accessoires.

Les équipements qui nécessitent un prélèvement d'énergie mécanique pour être entraînés en rotation, par exemple des pompes, sont également appelés accessoires et sont généralement montés sur une boite d'accessoires qui comprend au moins un train d'engrenages pour adapter les vitesses de rotation des accessoires.

Une fois la phase de démarrage terminée, il est connu d'utiliser la machine électrique réversible dans un mode de fonctionnement générateur pour produire de l'énergie électrique non propulsive (réseau 28V par exemple) pour fournir de l'électricité aux appareillages électriques. La machine électrique 1 génère de l'énergie électrique en prélevant de la puissance mécanique sur l'arbre 2 du générateur de gaz 3, l'énergie cinétique de rotation prélevée sur le générateur de gaz étant transformée en énergie électrique par ladite machine.

Cette machine électrique 1 peut être non réversible et constituée d'un simple démarreur, tel qu'un starter, si le besoin de génération électrique n'existe pas.

Sur la figure 2 est illustrée l'évolution, en fonction du temps et de la configuration possible du turbogénérateur, du régime de l'arbre 2 du générateur de gaz 3 en trait plein et du régime de l'arbre 8 de la turbine libre 9 en pointillés. On peut voir que l'évolution du régime des deux arbres est indépendante. Le point de sortie de la phase de démarrage est indiqué également.

Pour un turbomoteur, avec une turbine libre et un système de démarrage classique utilisant une machine électrique réversible, le prélèvement mécanique sur l'arbre du générateur de gaz servant à générer de la puissance électrique par la machine électrique réversible 1 dans un mode de fonctionnement générateur grève les performances du générateur de gaz.

En effet, la variation, au cours du vol, de la puissance mécanique prélevée par la machine électrique 1 et les équipements sur le générateur de gaz se traduit par un déplacement de la ligne de fonctionnement du moteur dans le champ compresseur. Ce déplacement correspond à une marge au pompage qu'il est nécessaire de provisionner, ce qui a pour conséquence :
- de pénaliser l'optimisation de la ligne de fonctionnement du moteur, en interdisant l'utilisation du compresseur à un taux de pression optimal ;
- de dégrader de ce fait les performances stabilisées, avec un impact sur la consommation spécifique.

Avec une telle configuration, une solution pour ne pas prélever de puissance mécanique sur l'arbre générateur afin de générer de l'électricité consiste à utiliser une machine électrique pour la fonction de démarrage avec un système de débrayage, et une autre machine électrique solidaire de l'arbre de turbine libre pour la fonction de génération comme illustré sur la figure 1, ce qui est pénalisant en termes de masse et de coût, en plus d'être rarement utilisé en pratique.

Une architecture connue permettant de démarrer un turbogénérateur à turbine libre sans adjonction de démarreur spécifique est divulguée dans le document FR 2 929 324. Cette solution technique permet de réduire la masse totale et le coût et d'augmenter la fiabilité du turbogénérateur par rapport à une turbomachine comprenant deux machines électriques comme sur la figure 1. La solution technique décrite dans ce document consiste en un système de commutation utilisant deux roues libres permettant de démarrer le générateur de gaz d'un turbomoteur à turbine libre, puis de générer l'énergie électrique non propulsive en prélevant l'énergie mécanique sur l'arbre de turbine libre. Les équipements restent entraînés via le générateur de gaz et la boîte d'accessoires.

Cette solution permet notamment d'améliorer les performances transitoires du générateur de gaz, en évitant les inconvénients d'un prélèvement d'énergie cinétique sur le générateur de gaz, et notamment le problème du déplacement de la ligne de fonctionnement du moteur dans le champ compresseur du fait de la variation, au cours du vol, de la puissance mécanique prélevée par la machine électrique.

Cette architecture avec deux roues libres est avantageuse dans le cadre d'une turbomachine d'hélicoptère afin de ne pas entraîner le rotor principal via la machine électrique pendant la phase de démarrage. En effet la turbine libre de la turbomachine étant mécaniquement raccordée au rotor principal, un couplage entre l'arbre de la turbine libre et le rotor principal qui ne pourrait pas être découplé pendant la phase de démarrage nécessiterait de sur-dimensionner au moins le système de stockage d'énergie afin que la machine électrique dispose de suffisamment d'énergie pour pouvoir entraîner en rotation toute la chaine cinématique (incluant le rotor principal).

Toutefois un tel système n'est pas adapté au cas d'un turbogénérateur à turbine libre pour aéronef à voilure tournante entraînée électriquement, dans lequel l'arbre de la turbine libre n'est pas couplé à un rotor de la voilure tournante de l'aéronef. Autrement dit, un tel système est relativement trop lourd et complexe pour un turbogénérateur à turbine libre dans lequel l'inertie de la ligne d'arbre de turbine libre est généralement faible.

Il est connu du document FR 3 081 150 une turbomachine selon le préambule de la revendication 1.

Afin d'améliorer la performance de la turbomachine à turbine libre, il serait intéressant aussi de pouvoir entraîner l'ensemble des équipements de la turbomachine via la turbine libre. Mais la performance de la pompe à carburant étant associée à sa vitesse de rotation, l'évolution de vitesse de la turbine libre après la phase de démarrage ne permettrait pas, ou impacterait fortement, le design de l'ensemble système carburant pour garantir un bon démarrage de la turbomachine.

### Exposé de l'invention

A cet effet, la présente invention propose une turbomachine à turbine libre entraînant une ou plusieurs machines électriques de puissance suffisante dotée d'un système de commutation simplifié permettant d'optimiser la masse, le coût et la fiabilité.

Dans un objet de l'invention, il est proposé une turbomachine comportant un générateur de gaz doté d'un premier arbre mécanique, au moins une machine électrique réversible, une turbine libre dotée d'un second arbre mécanique et entraînée en rotation par un flux de gaz généré par le générateur de gaz, une boîte d'accessoires, et au moins un accessoire couplé à la boîte d'accessoires.

Selon une caractéristique technique de l'invention, la machine électrique est mécaniquement couplée audit second arbre mécanique via la boîte d'accessoires durant toutes les phases de fonctionnement de la turbomachine, et la turbomachine comprend en outre un unique moyen de couplage mécanique configuré pour mécaniquement coupler ledit premier arbre mécanique à la boîte d'accessoires dans une première configuration et découpler mécaniquement ledit premier arbre mécanique de la boîte d'accessoires dans une seconde configuration, la machine électrique étant dimensionnée pour entraîner le générateur de gaz, la turbine libre et ledit au moins un accessoire lors du démarrage de la turbomachine.

La turbomachine selon l'invention comprenant une machine électrique et une seule roue libre permet ainsi de mutualiser la fonction de démarrage du générateur de gaz et de génération électrique forte puissance sur la machine électrique, et permet à la turbine libre d'entrainer les accessoires une fois la turbomachine démarrée. En effet, elle permet d'initier à la fois la rotation des accessoires, de la turbine libre et celle du générateur de gaz jusqu'à ce que le générateur de gaz puisse fonctionner en autonomie, puis de continuer d'entrainer la turbine libre et les accessoires jusqu'à ce que la turbine libre puisse également fonctionner en autonomie. Une fois la turbine libre en rotation autonome, la machine électrique peut fonctionner en mode générateur et fournir ainsi de la puissance électrique à d'autres éléments.

L'architecture de la turbomachine selon l'invention permet ainsi de n'avoir qu'un unique moyen de couplage mécanique, tel qu'une roue libre, ce qui permet de simplifier le système de commutation et notamment, par rapport aux solutions connues, de réduire la masse et le coût.

Sur une application de la turbomachine de type turbogénérateur, la ou les machine(s) électrique(s) sont dimensionnées pour générer des niveaux de puissance électrique élevés (par exemple pour de l'énergie propulsive), et peuvent, lorsqu'elles sont utilisées en mode moteur, facilement délivrer le couple nécessaire pour entraîner le générateur de gaz, la turbine libre et les équipements pendant la phase de démarrage. En effet, sur de telles applications, l'inertie de la ligne d'arbre de turbine libre est faible car non couplée à un rotor hélicoptère par exemple (chaîne de puissance et rotors des machines électriques uniquement).

En outre, l'architecture selon l'invention permet en cas de rupture de l'arbre de turbine libre en fonctionnement d'impacter directement l'entrainement des accessoires (dont la pompe à carburant) ayant pour effet direct d'éteindre instantanément le moteur et donc de limiter la survitesse de la turbine libre. Cette architecture a pour effet de protéger en survitesse la turbine libre.

Selon un premier aspect de la turbomachine, la turbomachine peut comprendre en outre une unité de commande de la machine électrique, l'unité de commande étant configurée pour placer la machine électrique en mode moteur lors du démarrage de la turbomachine, et placer la machine électrique en mode générateur lorsque le régime du premier arbre mécanique dépasse un seuil de vitesse de sortie de phase de démarrage.

En découplant le générateur de gaz de la boîte d'accessoires une fois que le générateur de gaz a atteint un régime permettant son fonctionnement en autonomie, l'énergie électrique à délivrer par la machine électrique (jusqu'au fonctionnement autonome de la turbine libre) est réduite puisque la quantité d'énergie nécessaire ne correspond plus qu'à celle pour entraîner la turbine libre et les accessoires.

La phase de transition entre le fonctionnement autonome du générateur de gaz et le fonctionnement autonome de la turbine libre, pendant laquelle la machine électrique continue de fonctionner en mode moteur mais seulement pour les accessoires et la turbine libre, permet ainsi de conserver la vitesse de rotation des équipements, ou accessoires, suffisamment élevée pour garantir leur bon fonctionnement.

Selon un deuxième aspect de la turbomachine, la machine électrique peut être configurée pour fonctionner en mode moteur depuis la phase de démarrage de la turbomachine et jusqu'à ce qu'un des paramètres de fonctionnement du second arbre mécanique ou de ladite machine électrique ait dépassé un seuil à partir duquel la turbine libre est dite autonome. La valeur du paramètre de fonctionnement correspondant au seuil à partir duquel la turbine libre est autonome est de préférence supérieure à la valeur que ledit paramètre de fonctionnement présente lorsque le premier arbre atteint le seuil de vitesse de sortie de phase de démarrage, En d'autres termes, le seuil à partir duquel la turbine libre est autonome arrive après le moment ou le générateur de gaz est devenu autonome. La machine électrique est configurée pour fonctionner en mode générateur une fois que ledit paramètre du second arbre mécanique ou de la machine électrique a dépassé le seuil à partir duquel la turbine libre est autonome.

La phase de démarrage et celle de transition peuvent être réalisées via un pilotage en couple ou un pilotage en vitesse. Un paramètre de fonctionnement du second arbre mécanique peut être sa vitesse ou son couple mécanique.

Selon un troisième aspect de la turbomachine, l'unité de commande est configurée pour piloter la machine électrique en mode moteur :
- en fonction de la vitesse de rotation des premier et second arbres mécaniques à partir de la mise en route de la turbomachine jusqu'à l'allumage du générateur de gaz, puis
- en fonction du niveau de couple nécessaire pour entraîner les premier et second arbres mécaniques jusqu'à ce que le générateur de gaz fonctionne de manière autonome, puis
- en fonction de la vitesse de rotation des premier et second arbres mécaniques jusqu'à ce que ledit paramètre du second arbre mécanique ait dépassé un seuil à partir duquel la turbine libre est autonome

L'unité de commande pilote la machine électrique tout en interagissant avec le calculateur de la turbomachine.

Le pilotage en vitesse avant la détection d'allumage permet de rester dans la fenêtre préférentielle d'allumage, c'est-à-dire l'intervalle de régime dans lequel les chances de réussir l'allumage sont les plus élevées.

Le pilotage en vitesse pendant la phase de transition, c'est-à-dire après le découplage du générateur de gaz et avant le passage en mode générateur de la machine électrique, permet de conserver une vitesse constante durant la transition en palliant à la variation de couple sur les accessoires couplés à la boîte d'accessoires.

Le couple fourni par la machine électrique durant la phase de transition réduira jusqu'à s'annuler au fur et à mesure de l'augmentation du couple délivré par la turbine libre.

Selon un quatrième aspect de la turbomachine, le moyen de couplage mécanique peut comprendre une roue libre.

Selon un cinquième aspect de la turbomachine, le moyen de couplage peut être compris dans un carter de la boîte d'accessoires.

Les pignons de la boite d'accessoires permettent ainsi d'adapter les vitesses pour les équipements, tels qu'une pompe à carburant ou une pompe à huile, mécaniquement couplés au premier arbre mécanique, c'est-à-dire au générateur de gaz, mais aussi d'assurer, hors phase de démarrage, que la vitesse en entrée de la roue libre, c'est-à-dire sur la borne mécanique de la roue libre couplée au second arbre mécanique, soit toujours inférieure à la vitesse de sortie de la roule libre, c'est-à-dire sur la borne mécanique de la roue libre couplée au premier arbre mécanique. Et ce sur toute la plage de fonctionnement nominal du générateur de gaz et de la turbine libre, hors phase de démarrage donc.

Selon un septième aspect de la turbomachine, la boîte d'accessoires peut être configurée pour modifier le rapport de vitesse entre la turbine libre et le générateur de gaz lorsque le moyen de couplage mécanique est dans sa première configuration Selon un septième aspect de la turbomachine, la boîte d'accessoires peut être disposée et raccordable entre le moyen de couplage mécanique et le second arbre mécanique.

La boîte d'accessoires permet de modifier le rapport de transmission en prenant en compte le signe du rapport, c'est-à-dire en offrant la possibilité d'assurer une contrarotativité des deux arbres, tout en assurant l'intégration de fonctions secondaires.

Cette configuration permet d'améliorer l'efficacité des ventilations après arrêt moteur, les deux arbres étant entraînés simultanément.

Selon un septième aspect de la turbomachine, la turbomachine peut comprendre en outre une boîte d'accessoires additionnelle raccordée au premier arbre pour coupler des accessoires additionnels directement au générateur de gaz en permanence.

### Brève description des dessins

[Fig. 1] La figure 1, déjà décrite, est une vue schématique simplifiée d'une turbomachine à turbine libre selon l'état de la technique.
[Fig. 2] La figure 2, déjà décrite, est une représentation graphique de l'évolution, en fonction du temps et de la configuration possible du turbogénérateur, du régime de l'arbre du générateur de gaz et du régime de l'arbre de la turbine libre de la turbomachine de la figure 1.
[Fig. 3] La figure 3 est un schéma d'une turbomachine à turbine libre selon un mode de réalisation de l'invention.
[Fig. 4] La figure 4 présente un logigramme d'un procédé de commande du démarrage de la turbomachine de la figure 3 selon un mode de mise en oeuvre.
[Fig. 5] La figure 5 est une représentation graphique de l'évolution, en fonction du temps et de la configuration possible du turbogénérateur, du régime de l'arbre du générateur de gaz et du régime de l'arbre de la turbine libre de la turbomachine de la figure 3.

### Description des modes de réalisation

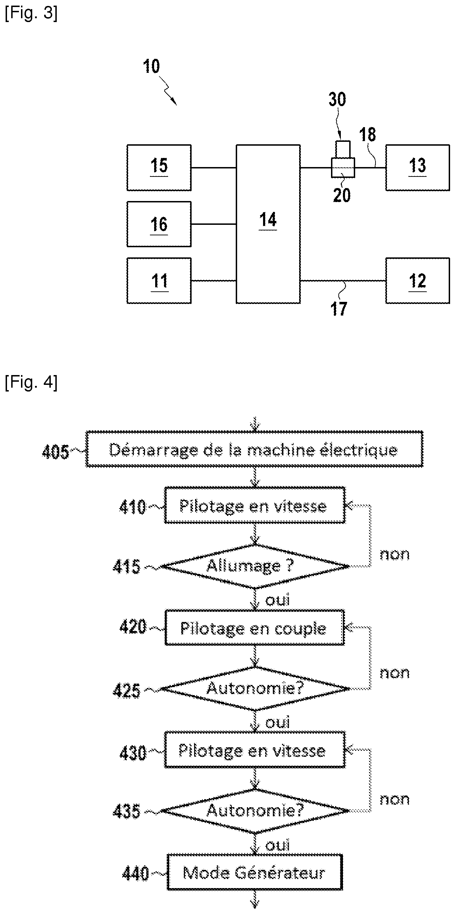

Sur la figure 3 est présentée schématiquement une turbomachine 10 à turbine libre selon un mode de réalisation de l'invention.

La turbomachine 10 comprend une machine électrique 11, une turbine libre 12, un générateur de gaz 13, une boîte d'accessoires 14, une pompe à carburant 15 et une pompe à huile 16.

La turbine libre 12 comprend un arbre 17 directement raccordé mécaniquement à la boîte d'accessoires 14 en permanence. La boîte d'accessoires 14 est mécaniquement couplée à la machine électrique 11. Ainsi, la chaine cinématique entre la machine électrique 11 et la turbine libre 12 ne comprend aucun dispositif de désaccouplement, ce qui permet ainsi d'avoir la turbine 12 couplée à la machine électrique 11 pendant toutes les phases de fonctionnement de la turbomachine 10, notamment pendant la phase de démarrage et la phase de génération électrique.

La boîte d'accessoires 14 est également mécaniquement couplée à la pompe à carburant 15, d'une part, et à la pompe à huile 16, d'autre part. Dans d'autres modes de réalisation d'autres accessoires peuvent être mécaniquement couplés à la boîte d'accessoires 14.

Le générateur de gaz 13 comprend un arbre 18 raccordé et couplé mécaniquement à la boîte d'accessoires 14 via un unique moyen 20 de couplage mécanique. L'unique moyen 20 de couplage mécanique est configuré pour mécaniquement coupler l'arbre 18 du générateur de gaz 13 à la boîte d'accessoires 14 dans une première configuration, et le découpler mécaniquement de la boîte d'accessoires 14 dans une seconde configuration afin notamment de découpler l'arbre 18 du générateur de gaz vis-à-vis de l'arbre 17 et la machine électrique 11. L'arbre 18 du générateur de gaz 13 est ainsi sélectivement couplé à la machine électrique 11 via la boîte d'accessoires 14.

Le moyen 20 de couplage mécanique comprend une roue libre.

La turbomachine 10 comprend en outre une unité de commande 30 de la machine électrique 11 configurée pour placer la machine électrique 11 dans mode moteur lors d'une phase de démarrage de la turbomachine 10 et placer la machine électrique 11 dans un mode générateur lorsqu'il est détecté que la turbine libre peut fonctionner de manière autonome.

Le moyen de couplage 20 est configuré mécaniquement pour avoir la machine électrique 11 mécaniquement couplée au générateur de gaz 13 via l'arbre 18 lors du démarrage de la turbomachine 10.

En outre, le moyen de couplage 20 est configuré mécaniquement pour découpler le générateur de gaz de la machine électrique 11 lorsque le générateur de gaz 13 atteint un seuil de vitesse de sortie de phase de démarrage.

Sur la figure 4 est présenté un logigramme d'un procédé de commande du démarrage de la turbomachine 10 selon un mode de mise en oeuvre de l'invention.

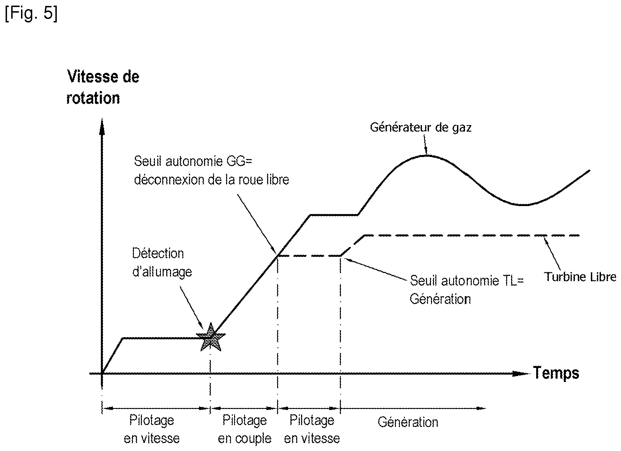

Sur la figure 5 est représentée graphiquement l'évolution, en fonction du temps et de la configuration possible du turbogénérateur, du régime de l'arbre 18 du générateur de gaz 13 en trait plein et, en pointillés, du régime de l'arbre 17 de la turbine libre 12 de la turbomachine 10 de la figure 3 lors de son démarrage en utilisant le procédé de la figure 4.

Le procédé de démarrage de la turbomachine 10 comprend une première étape 405 dans laquelle la machine électrique 11 est placée en mode moteur et démarrée pour entamer une mise en rotation des arbres 17 et 18 de la turbine libre 12 et du générateur de gaz 13 via la boîte d'accessoires 14. En effet, lors de la mise en rotation de la boite d'accessoires 14 par la machine électrique 11, le moyen de couplage mécanique 20, qui peut être une roue libre, transmet automatiquement le couple nécessaire pour la mise en rotation du générateur de gaz 13. A partir du démarrage de la machine électrique 11 dans la première étape 405, la machine électrique 11 est pilotée par exemple par l'unité de commande 30, dans une deuxième étape 410, en fonction de la vitesse de rotation de son arbre mécanique couplé à la boîte d'accessoires 14, afin que la vitesse de rotation de l'arbre 17 du générateur de gaz 13 se maintienne dans la fenêtre d'allumage, c'est-à-dire dans une plage de régime spécifiée pour maximiser les chances de réussite de l'allumage de la chambre de combustion du générateur de gaz. Pour ce pilotage, l'unité de commande 30 peut comprendre une unité électronique de traitement telle qu'un calculateur et recevoir une information de la vitesse de l'arbre de la machine électrique 11 ou de l'arbre 17 du générateur de gaz 13, ces deux vitesses étant proportionnelles entre elles avec un facteur de réduction propre au train d'engrenages de la boîte d'accessoires 14.

Dans une troisième étape 415, on vérifie si la chambre de combustion du générateur de gaz 13 est allumée. Tant que l'allumage du générateur de gaz 13 n'est pas détecté, le pilotage en vitesse de la machine électrique 11 est maintenu.

En revanche, dès que l'allumage du générateur de gaz 13 est détecté à l'étape 415, on pilote, dans une quatrième étape 420, la machine électrique 11 en couple suivant une courbe prédéfinie du couple en fonction de la vitesse de rotation de la machine électrique 11.

Dans une cinquième étape 425, on compare la vitesse de rotation de l'arbre 18 du générateur de gaz à un seuil de fonctionnement autonome du générateur de gaz. Le seuil de fonctionnement autonome du générateur de gaz 13 est défini par exemple par rapport à une valeur de vitesse de rotation à partir de laquelle le générateur de gaz peut fonctionner de manière autonome. Tant que la vitesse de rotation de l'arbre 18 du générateur de gaz 13 n'a pas atteint une valeur correspondant au seuil de fonctionnement autonome du générateur de gaz 13, le pilotage de la machine électrique 11 continue d'être réalisé en couple dans la quatrième étape 420.

En revanche, dès que le seuil est atteint, dans une sixième étape 430, la machine électrique 11 est pilotée en vitesse suivant un seuil permettant le bon fonctionnement des accessoires tels que la pompe à carburant 15 et la pompe à huile 16, et limitant la puissance électrique prélevée sur le réseau.

Dans une septième étape 435, on compare par exemple le niveau de couple délivré par la machine électrique et/ou sa vitesse de rotation à un seuil correspondant à partir duquel la turbine libre peut fonctionner de manière autonome, autrement dit à partir duquel le flux délivré par le générateur de gaz 13 suffit pour entretenir la rotation de la turbine libre 12 ou de l'accélérer. Tant que la puissance disponible sur la turbine libre 12 ne permet pas de réduire le couple délivré par la machine électrique permettant de maintenir sa vitesse de consigne, ou qu'il n'y a pas d'évolution positive de la vitesse de rotation, le pilotage de la machine électrique 11 continue d'être réalisé en fonction de la consigne de vitesse dans la sixième étape 420.

En revanche, dès que le seuil est atteint, dans une huitième étape 440, la machine électrique 11 change de mode de fonctionnement. La machine électrique 11 passe du mode moteur au mode générateur.

Ainsi, la machine électrique 11 peut fonctionner en générateur électrique et produire de l'énergie électrique à partir de la rotation de l'arbre 17 de la turbine libre entraîné par le mouvement rotatif de la turbine libre 12 elle-même entraînée par le flux gazeux délivré par le générateur de gaz 13.

La phase de transition entre le fonctionnement autonome du générateur de gaz 13 et le fonctionnement autonome de la turbine libre 12, pendant lequel la machine électrique 11 continue de fonctionner en mode moteur mais seulement pour assurer l'entrainement des accessoires et de la turbine libre 12, permet ainsi de conserver une vitesse de rotation des équipements ou accessoires suffisamment élevée pour garantir leur bon fonctionnement.

La turbomachine à turbine libre selon la présente invention permet ainsi d'optimiser la masse, le coût et la fiabilité du système de commutation et donc de la turbomachine.

## Revendications

1. Turbomachine (10) comportant un générateur de gaz (13) doté d'un premier arbre mécanique (18), au moins une machine électrique réversible (11), une turbine libre (12) munie d'un second arbre mécanique (17) et entraînée en rotation par un flux de gaz généré par le générateur de gaz (13), une boîte d'accessoires (14), et au moins un accessoire (15, 16) couplé à la boîte d'accessoires (14),
**caractérisée en ce que** ladite au moins une machine électrique réversible (11) est mécaniquement couplée au second arbre mécanique (17) via la boîte d'accessoires (14) durant toutes les phases de fonctionnement de la turbomachine (10), et la turbomachine (10) comprend en outre un unique moyen (20) de couplage mécanique configuré pour coupler mécaniquement ledit premier arbre mécanique (18) à la boîte d'accessoires (14) dans une première configuration et découpler mécaniquement ledit premier arbre mécanique (18) de la boîte d'accessoires (14) dans une seconde configuration, la machine électrique réversible (11) étant dimensionnée pour entraîner le générateur de gaz (13) ainsi que ledit au moins un accessoire (15, 16) et la turbine libre (12) lors du démarrage de la turbomachine (10).

2. Turbomachine (10) selon la revendication 1, comprenant en outre une unité de commande (30) de ladite au moins une machine électrique réversible (11), l'unité de commande (30) étant configurée pour placer la machine électrique (11) en mode moteur lors du démarrage de la turbomachine (10), et placer la machine électrique (11) en mode générateur lorsqu'il est détecté que la turbine libre peut fonctionner de manière autonome.

3. Turbomachine (10) selon la revendication 2, dans lequel la machine électrique réversible (11) est configurée pour fonctionner en mode moteur depuis la phase de démarrage de la turbomachine (10) et jusqu'à ce qu'un des paramètres mécaniques du second arbre mécanique (17) ou de la machine électrique (11) ait dépassé un seuil à partir duquel la turbine libre (12) est autonome, la machine électrique étant configurée pour fonctionner en mode générateur une fois que ledit paramètre du second arbre mécanique (17) ou de la machine électrique (11) a dépassé un seuil à partir duquel la turbine libre (12) est autonome.

4. Turbomachine selon la revendication 3, dans laquelle l'unité de commande (30) est configurée pour piloter la machine électrique réversible (11) en mode moteur :
- en fonction de la vitesse de rotation des premier et second arbres mécaniques (17 et 18) à partir de la mise en route de la turbomachine (10) jusqu'à l'allumage du générateur de gaz (13), puis
- en fonction du niveau de couple nécessaire pour entraîner les premier et second arbres mécaniques (17 et 18) jusqu'à ce que le générateur de gaz (13) fonctionne de manière autonome, puis
- en fonction de la vitesse de rotation des premier et second arbres mécaniques (17 et 18) jusqu'à ce que ledit paramètre du second arbre mécanique (17) ait dépassé un seuil à partir duquel la turbine libre (12) est autonome.

5. Turbomachine (10) selon l'une des revendications 1 à 4, dans laquelle le moyen (20) de couplage mécanique comprend une roue libre.

6. Turbomachine (10) selon l'une des revendications 1 à 5, dans laquelle le moyen (20) de couplage mécanique est compris dans un carter de la boîte d'accessoires (14).

7. Turbomachine (10) selon l'une des revendications 1 à 6, dans laquelle la boîte d'accessoires (14) est configurée pour modifier le rapport de vitesse entre la turbine libre (12) et le générateur de gaz (13) lorsque le moyen (20) de couplage mécanique est dans sa première configuration.

8. Turbomachine (10) selon l'une des revendications 1 à 5, dans laquelle la boîte d'accessoires (14) est disposée et raccordable entre le moyen (20) de couplage mécanique et le second arbre mécanique (17).

9. Turbomachine selon l'une des revendications 1 à 8, comprenant en outre une boîte d'accessoires additionnelle raccordée au premier arbre (18) pour coupler des accessoires additionnels directement au générateur de gaz (13) en permanence.

## Patentansprüche

1. Turbomaschine (10), die einen Gasgenerator (13), der mit einer ersten mechanischen Welle (18) ausgestattet ist, mindestens eine reversible elektrische Maschine (11), eine freie Turbine (12), die mit einer zweiten mechanischen Welle (17) versehen ist und durch einen Gasstrom, der durch den Gasgenerator (13) erzeugt wird, drehangetrieben wird, einen Zubehörkasten (14) und mindestens ein Zubehör (15, 16) beinhaltet, das an den Zubehörkasten (14) gekoppelt ist,
**dadurch gekennzeichnet, dass** die mindestens eine reversible elektrische Maschine (11) während aller Betriebsphasen der Turbomaschine (10) über den Zubehörkasten (14) mechanisch an die zweite mechanische Welle (17) gekoppelt ist, und die Turbomaschine (10) ferner ein einzelnes mechanisches Kopplungsmittel (20) umfasst, das dazu ausgestaltet ist, in einer ersten Ausgestaltung die erste mechanische Welle (18) mechanisch an den Zubehörkasten (14) zu koppeln und in einer zweiten Ausgestaltung die erste mechanische Welle (18) mechanisch von dem Zubehörkasten (14) zu entkoppeln, wobei die reversible elektrische Maschine (11) so dimensioniert ist, dass sie den Gasgenerator (13) sowie das mindestens eine Zubehör (15, 16) und die freie Turbine (12) während des Starts der Turbomaschine (10) antreibt.

2. Turbomaschine (10) nach Anspruch 1, ferner umfassend eine Steuereinheit (30) der mindestens einen reversiblen elektrischen Maschine (11), wobei die Steuereinheit (30) dazu ausgestaltet ist, die elektrische Maschine (11) während des Starts der Turbomaschine (10) in den Motormodus zu versetzen und die elektrische Maschine (11) in den Generatormodus zu versetzen, wenn erkannt wird, dass die freie Turbine auf autonome Weise arbeiten kann.

3. Turbomaschine (10) nach Anspruch 2, wobei die reversible elektrische Maschine (11) dazu ausgestaltet ist, ab der Startphase der Turbomaschine (10) und bis einer der mechanischen Parameter der zweiten mechanischen Welle (17) oder der elektrischen Maschine (11) einen Schwellenwert überschritten hat, ab dem die freie Turbine (12) autonom ist, in dem Motormodus zu arbeiten, wobei die elektrische Maschine dazu ausgestaltet ist, in dem Generatormodus zu arbeiten, sobald der Parameter der zweiten mechanischen Welle (17) oder der elektrischen Maschine (11) einen Schwellenwert überschritten hat, ab dem die freie Turbine (12) autonom ist.

4. Turbomaschine nach Anspruch 3, wobei die Steuereinheit (30) dazu ausgestaltet ist, die reversible elektrische Maschine (11) im Motormodus zu steuern:
- abhängig von der Drehzahl der ersten und der zweiten mechanischen Welle (17 und 18) ab der Inbetriebnahme der Turbomaschine (10) bis zu der Zündung des Gasgenerators (13), dann
- abhängig von dem Drehmomentniveau, das erforderlich ist, um die erste und die zweite mechanische Welle (17 und 18) anzutreiben, bis der Gasgenerator (13) auf autonome Weise arbeitet, dann
- abhängig von der Drehzahl der ersten und der zweiten mechanischen Welle (17 und 18), bis der Parameter der zweiten mechanischen Welle (17) einen Schwellenwert überschritten hat, ab dem die freie Turbine (12) autonom ist.

5. Turbomaschine (10) nach einem der Ansprüche 1 bis 4, wobei das mechanische Kopplungsmittel (20) einen Freilauf umfasst.

6. Turbomaschine (10) nach einem der Ansprüche 1 bis 5, wobei das mechanische Kopplungsmittel (20) in einem Gehäuse des Zubehörkastens (14) umfasst ist.

7. Turbomaschine (10) nach einem der Ansprüche 1 bis 6, wobei der Zubehörkasten (14) dazu ausgestaltet ist, das Übersetzungsverhältnis zwischen der freien Turbine (12) und dem Gasgenerator (13) zu modifizieren, wenn das mechanische Kopplungsmittel (20) in seiner ersten Ausgestaltung ist.

8. Turbomaschine (10) nach einem der Ansprüche 1 bis 5, wobei der Zubehörkasten (14) zwischen dem mechanischen Kopplungsmittel (20) und der zweiten mechanischen Welle (17) angeordnet und verbindbar ist.

9. Turbomaschine nach einem der Ansprüche 1 bis 8, ferner umfassend einen zusätzlichen Zubehörkasten, der mit der ersten Welle (18) verbunden ist, um zusätzliches Zubehör dauerhaft direkt an den Gasgenerator (13) zu koppeln.

## Claims

1. A turbomachine (10) comprising a gas generator (13) equipped with a first mechanical shaft (18), at least one reversible electrical machine (11), a free turbine (12) provided with a second mechanical shaft (17) and caused to rotate by a gas flow generated by the gas generator (13), an accessory gear box (14), and at least one accessory (15, 16) coupled to the accessory gear box (14), **characterised in that** said at least one reversible electrical machine (11) is mechanically coupled to the second mechanical shaft (17) via the accessory gear box (14) during all the phases of operation of the turbomachine (10), and the turbomachine (10) further comprises a single mechanical coupling means (20) for mechanically coupling said first mechanical shaft (18) to the accessory gear box (14) in a first configuration and mechanically uncoupling said first mechanical shaft (18) from the accessory gear box (14) in a second configuration, the reversible electrical machine (11) being sized to cause the gas generator (13), as well as said at least one accessory (15, 16) and the free turbine (12) to rotate during start-up of the turbomachine (10).

2. The turbomachine (10) according to claim 1, further comprising a control unit (30) of said at least one reversible electrical machine (11), the control unit (30) being configured to place the reversible electrical machine (11) in motor mode during start-up of the turbomachine (10), and to place the reversible electrical machine (11) in generator mode when it is detected that the free turbine can operate autonomously.

3. The turbomachine (10) according to claim 2, wherein the reversible electrical machine (11) is configured to operate in motor mode from the start-up phase of the turbomachine (10) and until one of the mechanical parameters of the second mechanical shaft (17) or of the reversible electrical machine (11) has exceeded a threshold at which the free turbine (12) is autonomous, the electrical machine being configured to operate in generator mode once said parameter of the second mechanical shaft (17) or of the reversible electrical machine (11) has exceeded a threshold at which the free turbine (12) is autonomous.

4. The turbomachine according to claim 3, wherein the control unit (30) is configured to control the reversible electrical machine (11) in motor mode:
- as a function of the speed of rotation of the first and second mechanical shafts (17 and 18) from the starting of the turbomachine (10) until ignition of the gas generator (13), then
- as a function of the level of torque required to drive the first and second mechanical shafts (17 and 18) until the gas generator (13) operates autonomously, then
- as a function of the speed of rotation of the first and second mechanical shafts (17 and 18) until said parameter of the second mechanical shaft (17) has exceeded a threshold at which the free turbine (12) is autonomous.

5. The turbomachine (10) according to one of claims 1 to 4, wherein the mechanical coupling means (20) comprises a free wheel.

6. The turbomachine (10) according to one of claims 1 to 5, wherein the mechanical coupling means (20) is contained in a casing of the accessory gear box (14).

7. The turbomachine (10) according to one of claims 1 to 6, wherein the accessory gear box (14) is configured to change the gear ratio between the free turbine (12) and the gas generator (13) when the mechanical coupling means (20) is in its first configuration.

8. The turbomachine (10) according to one of claims 1 to 5, wherein the accessory gear box (14) is arranged and can be connected between the mechanical coupling means (20) and the second mechanical shaft (17).

9. The turbomachine according to one of claims 1 to 8, further comprising an accessory gear box additionally connected to the first shaft (18) for permanently coupling additional accessories directly to the gas generator (13).
